# EUROPÄISCHE PATENTANMELDUNG

(11) **EP 4 425 479 A1**
(43) Veröffentlichungstag der Anmeldung: **04.09.2024**
(21) Anmeldenummer: 23158972.2
(22) Anmeldetag: 28.02.2023
(51) Int. Cl.: G09G 5/00, G09G 5/14

(54) **MULTIPLEXER, VIDEOSYSTEM, LUFTFAHRZEUG UND VERFAHREN ZUR AUSGABE VON VIDEODATEN**

(71) Anmelder: Airbus Operations GmbH, 21129 Hamburg (DE)
(72) Erfinder: Berkhahn, Sven-Olaf, 21129 Hamburg (DE)

(57) **Zusammenfassung**

Die vorliegende Erfindung betrifft einen Multiplexer (100), mit einem ersten Videodateneingang (110), welcher dazu ausgebildet ist, erste Videodaten zu empfangen; einem zweiten Videodateneingang (120), welcher dazu ausgebildet ist, zweite Videodaten zu empfangen; einem Videodatenausgang (130), welcher dazu ausgebildet ist, die ersten Videodaten und die zweiten Videodaten auszugeben; und einer Schalteinrichtung (140), welche zwischen dem ersten und zweiten Videodateneingang (110; 120) und dem Videodatenausgang (130) angeordnet und dazu ausgebildet ist, sicherzustellen, dass alle der ersten Videodaten von dem Videodatenausgang (130) ausgegeben werden. Des Weiteren betrifft die vorliegende Erfindung ein Videosystem (10), ein Luftfahrzeug, sowie ein Verfahren zur Ausgabe von Videodaten.

## Beschreibung

### TECHNISCHES GEBIET DER ERFINDUNG

Die vorliegende Erfindung betrifft einen Multiplexer, ein Videosystem, ein Luftfahrzeug und ein Verfahren zur Ausgabe von Videodaten.

### HINTERGRUND DER ERFINDUNG

In modernen Passagierflugzeugen werden den Passagieren eine Vielzahl an visuellen Informationen zur Verfügung gestellt. Hierzu zählen zum einen essenzielle Informationen, etwa Hinweise auf die Pflicht, einen Sicherheitsgurt während eines Start- oder Landevorgangs anzulegen, als auch nicht-essenzielle Information, etwa Unterhaltungsmedien.

Aufgrund des Wunsches, sämtliche Komponenten eines Luftfahrzeugs möglichst kompakt auszugestalten, gibt es auch Bestrebungen, die Anzeigevorrichtungen für die verschiedenen Arten von Informationen ebenfalls möglichst kompakt auszugestalten, wie etwa in der Druckschrift DE 10 2009 045 462 A1 beschrieben. Eine Anzeige aller Videodaten mittels einer einzigen Anzeigevorrichtung wurde bereits in Betracht gezogen, konnte jedoch bisher nicht realisiert werden, da nicht sichergestellt werden konnte, dass die essenziellen Informationen garantiert angezeigt werden.

In anderen Bereichen sind Vorrichtungen zur Kombination von mehreren Videodateneingängen zu einem einzelnen Videodatenausgang, etwa aus der Druckschrift US 7,030,934 B2, bekannt. Da bei diesen jedoch kein Unterschied zwischen essenziellen und nicht-essenziellen Videodaten gemacht wird, können diese nicht ohne Weiteres in einem Luftfahrzeug verwendet werden.

### ZUSAMMENFASSUNG DER ERFINDUNG

In diesem Kontext liegt der vorliegenden Erfindung die Aufgabe zugrunde, die Kombination mehrerer Videodatenquellen in einer einzelnen Videoanzeige im Kontext der Anforderungen an das Betreiben eines Luftfahrzeugs zu ermöglichen.

Diese Aufgabe wird gelöst durch einen Multiplexer mit den Merkmalen des Patentanspruchs 1, ein Videosystem mit den Merkmalen des Patentanspruchs 7, ein Luftfahrzeug mit den Merkmalen des Patentanspruchs 10 und ein Verfahren zur Ausgabe von Videodaten mit den Merkmalen des Patentanspruchs 11.

Dementsprechend ist ein Multiplexer mit einem ersten Videodateneingang, welcher dazu ausgebildet ist, erste Videodaten zu empfangen, einem zweiten Videodateneingang, welcher dazu ausgebildet ist, zweite Videodaten zu empfangen, einem Videodatenausgang, welcher dazu ausgebildet ist, die ersten Videodaten und die zweiten Videodaten auszugeben, und einer Schalteinrichtung, welche zwischen dem ersten und zweiten Videodateneingang und dem Videodatenausgang angeordnet und dazu ausgebildet ist, sicherzustellen, dass alle der ersten Videodaten von dem Videodatenausgang ausgegeben werden, vorgesehen.

Nach einem weiteren Aspekt der Erfindung ist ein Videosystem mit mindestens einem erfindungsgemäßen Multiplexer, einer ersten Videodatenerzeugungsvorrichtung, welche mit dem ersten Videodateneingang des mindestens einen Multiplexers verbunden ist, einer zweiten Videodatenerzeugungsvorrichtung, welche mit dem zweiten Videodateneingang des mindestens einen Multiplexers verbunden ist, und mindestens einer Videoanzeigevorrichtung, welche mit dem Videodatenausgang des mindestens Multiplexers verbunden ist, vorgesehen.

Nach einem weiteren Aspekt der Erfindung ist ein Luftfahrzeug mit einem erfindungsgemäßen Videosystem vorgesehen.

Nach einem weiteren Aspekt der Erfindung ist ein Verfahren zur Ausgabe von Videodaten, aufweisend ein Empfangen von ersten Videodaten durch einen ersten Videodateneingang eines Multiplexers, ein Empfangen von zweiten Videodaten durch einen zweiten Videodateneingang des Multiplexers, und ein Ausgeben von Videodaten durch einen Videodatenausgang des Multiplexers, wobei die zweiten Videodaten nur ausgegeben werden, wenn eine Schalteinrichtung des Mutliplexers bestimmt, dass alle der ersten Videodaten ausgegeben wurden, vorgesehen.

Eine Idee der vorliegenden Erfindung ist das Vorsehen einer Schalteinrichtung, welche dafür vorgesehen ist, in einem Standardzustand, die ersten Videodaten an den Videodatenausgang weiterzuleiten und nur in den Fällen, in welchen alle der ersten Videodaten weitergeleitet wurden, die zweiten Videodaten weiterzuleiten, wobei nicht alle der zweiten Videodaten notwendigerweise an den Videodatenausgang weitergeleitet werden. Hierdurch findet eine Priorisierung der Videodaten statt, wobei den ersten Videodaten eine höhere Priorität zugeteilt wird als den zweiten Videodaten. Für den Fall, wie beispielsweise im Kontext eines Luftfahrzeugs, dass die ersten Videodaten essenziell und die zweiten Videodaten nicht-essenziell sein sollten, wird damit sichergestellt, dass essenzielle Daten garantiert angezeigt werden.

Gemäß eines Ausführungsbeispiels ist der Multiplexer derart ausgebildet, dass alle der ersten Videodaten an die Schalteinrichtung übermittelt werden. Hierdurch kann vorteilhaft vermieden werden, dass Teile der ersten Videodaten nicht ausgegeben werden.

Gemäß eines weiteren Ausführungsbeispiels weist der Multiplexer weiterhin eine Videoauswertungseinrichtung auf, welche dazu ausgebildet ist, die ersten Videodaten zu analysieren und einen ersten Pixel eines in den ersten Videodaten enthaltenen Videoframes zu bestimmen. Hierdurch kann vorteilhaft einfach bestimmt werden, zu welchen Zeitpunkten erste Videodaten ausgegeben werden sollen.

Gemäß eines weiteren Ausführungsbeispiels weist der Multiplexer weiterhin eine erste Pixelzähleinrichtung auf, welche dazu ausgebildet ist, ausgehend von dem von der Videoauswertungseinrichtung bestimmten ersten Pixel die Schalteinrichtung zu veranlassen, die zweiten Videodaten auszugeben, wenn alle Pixel des in den ersten Videodaten enthaltenen Videoframes ausgegeben wurden. Hierdurch kann vorteilhaft einfach bestimmt werden, zu welchen Zeitpunkten erste Videodaten ausgegeben werden sollen.

Gemäß eines weiteren Ausführungsbeispiels weist der Multiplexer weiterhin eine zweite Pixelzähleinrichtung auf, welche dazu ausgebildet ist, ausgehend von dem von der Videoauswertungseinrichtung bestimmten ersten Pixel zu veranlassen, dass die zweiten Videodaten an die Schalteinrichtung übermittelt werden, wenn alle Pixel des in den ersten Videodaten enthaltenen Videoframes ausgegeben wurden. Hierdurch kann vorteilhaft einfach vermieden werden, dass zweite Videodaten anstelle von ersten Videodaten ausgegeben werden.

Gemäß eines weiteren Ausführungsbeispiels weist der Multiplexer weiterhin eine Speichereinrichtung auf, welche dazu ausgebildet ist, die zweiten Videodaten zu speichern. Hierdurch kann vorteilhaft sichergestellt werden, dass die zweiten Videodaten zur Verfügung stehen, wenn diese ausgegeben werden sollen.

Gemäß eines Ausführungsbeispiels des Videosystems ist die erste Videodatenerzeugungsvorrichtung dazu ausgebildet, essenzielle, insbesondere sicherheitsrelevante, Videodaten zu erzeugen, und die zweite Videodatenerzeugungsvorrichtung dazu ausgebildet, nicht-essenzielle, insbesondere nicht sicherheitsrelevante Videodaten zu erzeugen. In diesem Ausführungsbeispiel wird sichergestellt, dass die essenziellen Videodaten garantiert angezeigt werden.

Gemäß eines weiteren Ausführungsbeispiels weist das Videosystem eine Vielzahl an Multiplexern und eine Vielzahl an Videoanzeigevorrichtungen auf. Die erste Videodatenerzeugungseinrichtung ist mit jedem ersten Videodateneingang eines jeden der Vielzahl an Multiplexern verbunden ist, die zweite Videodatenerzeugungseinrichtung ist mit jedem zweiten Videodateneingang eines jeden der Vielzahl an Multiplexern verbunden ist, und jede der Vielzahl an Videoanzeigevorrichtungen ist mit dem Videodatenausgang eines der Vielzahl an Multiplexern verbunden. Hierdurch können die Videodaten, insbesondere die ersten Videodaten, an mehreren Anzeigevorrichtungen zeitgleich angezeigt werden.

Gemäß eines Ausführungsbeispiels weist das Verfahren weiterhin ein Bestimmen eines ersten Pixel eines in den ersten Videodaten enthaltenen Videoframes durch eine Videodatenauswertungseinrichtung des Multiplexers, auf. Hierdurch kann vorteilhaft einfach bestimmt werden, zu welchen Zeitpunkten erste Videodaten ausgegeben werden sollen.

Gemäß eines weiteren Ausführungsbeispiels des Verfahrens bestimmt die Schalteinrichtung des Multiplexers mittels einer ersten Pixelzähleinrichtung, welche die ersten Videodaten ausgehend von dem bestimmen ersten Pixels des in den ersten Videodaten enthaltenen Videoframes einzelnen Videoframes zuordnet, wann all der ersten Videodatenausgegeben wurden. Hierdurch kann vorteilhaft einfach bestimmt werden, zu welchen Zeitpunkten erste Videodaten ausgegeben werden sollen.

Gemäß eines weiteren Ausführungsbeispiels des Verfahrens werden die zweiten Videodaten nur an die Schalteinrichtung übermittelt, wenn eine zweite Pixelzähleinrichtung des Multiplexers ausgehend von dem bestimmen ersten Pixels des in den ersten Videodaten enthaltenen Videoframes bestimmt, dass alle der ersten Videodaten ausgegeben wurden. Hierdurch kann vorteilhaft einfach vermieden werden, dass zweite Videodaten anstelle von ersten Videodaten ausgegeben werden.

Gemäß eines weiteren Ausführungsbeispiels des Verfahrens werden die zweiten Videodaten in einer Speichereinrichtung des Multiplexers gespeichert. Hierdurch kann vorteilhaft sichergestellt werden, dass die zweiten Videodaten zur Verfügung stehen, wenn diese ausgegeben werden sollen.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Videosystems gemäß eines Ausführungsbeispiels der vorliegenden Erfindung;
- Fig. 2: eine schematische Darstellung eines Luftfahrzeugs gemäß eines Ausführungsbeispiels der vorliegenden Erfindung; und
- Fig. 3: ein schematisches Flussdiagramm eines Verfahrens zur Ausgabe von Videodaten gemäß eines Ausführungsbeispiels der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

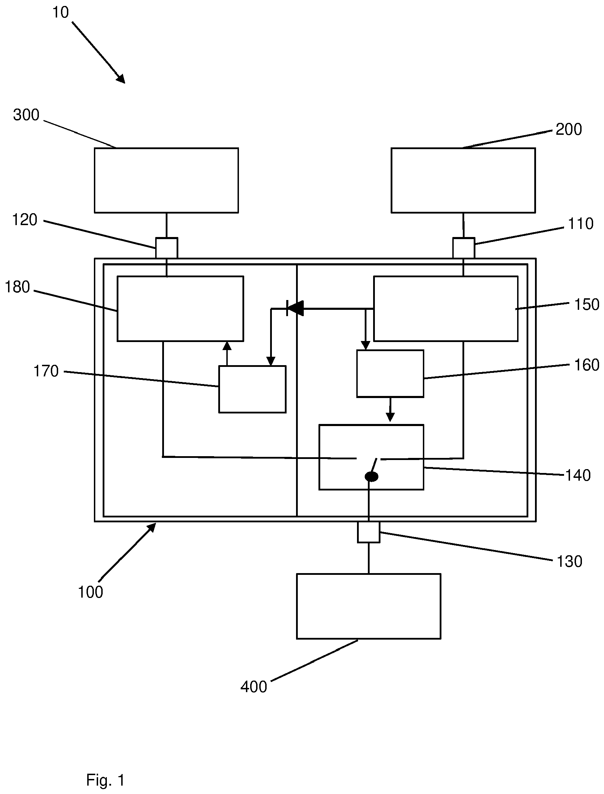

Fig. 1 zeigt eine schematische Darstellung eines Videosystems 10 gemäß eines Ausführungsbeispiels der vorliegenden Erfindung.

Das Videosystem 10 umfasst einen Multiplexer 100, eine ersten Videodatenerzeugungsvorrichtung 200, eine zweiten Videodatenerzeugungsvorrichtung 300, und eine Videoanzeigevorrichtung 400.

Der Multiplexer 100 umfasst einen ersten Videodateneingang 110, einen zweiten Videodateneingang 120, einen Videodatenausgang 130, eine Schalteinrichtung 140, eine Videoauswertungseinrichtung 150, eine erste Pixelzähleinrichtung 160, eine zweite Pixelzähleinrichtung 170, und eine Speichereinrichtung 180.

Der erste Videodateneingang 110 ist mit der ersten Videodatenerzeugungsvorrichtung 200 verbunden und dazu ausgebildet, erste Videodaten von der ersten Videodatenerzeugungsvorrichtung 200 zu empfangen. Der zweite Videodateneingang 120 ist mit der zweiten Videodatenerzeugungsvorrichtung 300 verbunden und dazu ausgebildet, zweite Videodaten von der zweiten Videodatenerzeugungsvorrichtung 300 zu empfangen. Der Videodatenausgang 130 ist mit der Videoanzeigevorrichtung 400 verbunden und dazu ausgebildet, Videodaten, im vorliegenden Ausführungsbeispiel entweder die ersten Videodaten oder die zweiten Videodaten, an die Videoanzeigevorrichtung 400 auszugeben. Je nachdem zu welcher Zeit, welche der ersten oder zweiten Videodaten ausgegeben werden, ergibt sich an der Videoanzeigevorrichtung 400 ein anderes wiedergegebenes Videobild, da die einzelnen Pixel des Bildes entweder auf den ersten oder den zweiten Videodaten basieren.

Die Schalteinrichtung 140 ist zwischen dem ersten 110 und zweiten Videodateneingang 120 und dem Videodatenausgang 130 angeordnet und dazu ausgebildet ist, sicherzustellen, dass alle der ersten Videodaten von dem Videodatenausgang 130 ausgegeben werden, wodurch zeitgleich sichergestellt wird, dass alle der ersten Videodaten in dem von der Videoanzeigevorrichtung 400 angezeigten Video dargestellt werden. Dieser Vorgang wird für das hier gezeigte Ausführungsbeispiel im Nachfolgenden näher erläutert.

Der Multiplexer 100 ist derart ausgebildet, dass alle der ersten Videodaten an die Schalteinrichtung 140 übermittelt werden. Von der Schalteinrichtung 140 können somit alle der ersten Videodaten an den Videodatenausgang 130 weitergeleitet werden. Die Videoauswertungseinrichtung 150 ist dazu ausgebildet ist ersten Videodaten zu analysieren und einen ersten Pixel eines in den ersten Videodaten enthaltenen Videoframes zu bestimmen. Wenn dieser erste Pixel bekannt ist, kann mittels der bekannten Anzahl an Pixeln in jedem Videoframe der ersten Videodaten sowie der Übertragungsrate der ersten Videodaten von der ersten Videodatenerzeugungsvorrichtung 200 an den ersten Videodateneingang 100 durch einfaches Zählen der Pixel bestimmt werden, zu welchem Zeitpunkt, erste Videodaten über den Videodatenausgang 130 ausgegeben werden müssen.

Hierfür ist die erste Pixelzähleinrichtung 160 vorgesehen, welche dazu ausgebildet ist, ausgehend von dem von der Videoauswertungseinrichtung 150 bestimmten ersten Pixel die Schalteinrichtung 140 zu veranlassen, die zweiten Videodaten auszugeben, wenn alle Pixel des in den ersten Videodaten enthaltenen Videoframes ausgegeben wurden. Wie oben beschrieben kann durch Zählen der Pixel der ersten Videodaten bestimmt werden, zu welchem Zeitpunkt die ersten Videodaten ausgegeben werden müssen. Zu allen anderen Zeitpunkten kann die Schalteinrichtung 140 dann die zweiten Videodaten an den Videodatenausgang 130 weiterleiten. In Kombination ergibt sich dann an der Videoanzeigevorrichtung 400 ein Bild, in welchem sowohl alle der ersten Videodaten angezeigt werden, während der Rest eines Bildschirms der zweiten Videoanzeigevorrichtung 400 die zweiten Videodaten anzeigt.

Zusätzlich ist in dem vorliegenden Ausführungsbeispiel die zweite Pixelzähleinrichtung 170 vorgesehen, welche dazu ausgebildet ist, ausgehend von dem von der Videoauswertungseinrichtung 150 bestimmten ersten Pixel zu veranlassen, dass die zweiten Videodaten an die Schalteinrichtung 140 übermittelt werden, wenn alle Pixel des in den ersten Videodaten enthaltenen Videoframes ausgegeben wurden. Da zweite Videodaten nur an die Schalteinrichtung 140 übermittelt werden, kann verhindert werden, dass versehentlich zweite Videodaten ausgegeben werden, wenn eigentlich erste Videodaten ausgegeben werden sollen.

Zusätzlich ist in dem vorliegenden Ausführungsbeispiel die Speichereinrichtung 180, welche dazu ausgebildet ist, die zweiten Videodaten zu speichern. Hierdurch wird verhindert, dass zweite Videodaten nicht mehr verfügbar sind, wenn diese weitergeleitet werden sollen.

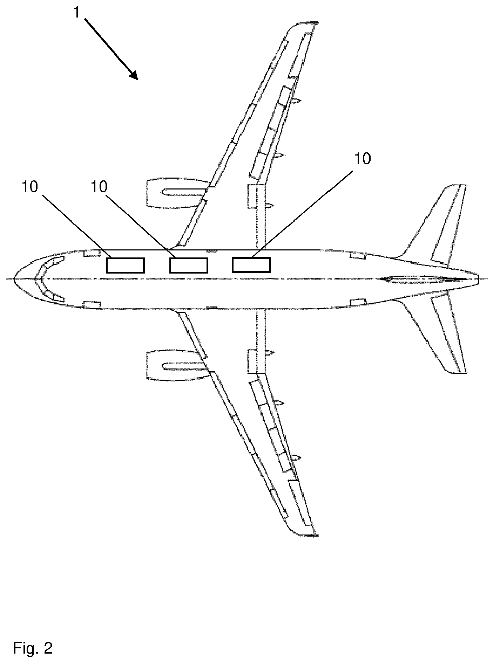

Fig. 2 zeigt eine schematische Darstellung eines Luftfahrzeugs 1 gemäß eines Ausführungsbeispiels der vorliegenden Erfindung.

Das Luftfahrzeug 1 umfasst eine Vielzahl an Videosystemen 10, von denen in Fig. 2 insgesamt drei gezeigt werden. Die Videosysteme 10 sind im vorliegenden Ausführungsbeispiel im Bereich der Kabine für die Passagiere angeordnet. Generell ist eine Anzahl an Videosystemen 10 vorgesehen, mit denen sichergestellt werden kann, dass für jeden Passagier eine Videoanzeigevorrichtung vorgesehen ist, wobei sich mehrere Passagiere auch eine Videoanzeigevorrichtung teilen können, je nach Ausgestaltung der Videoanzeigevorrichtungen.

Die Videosysteme 10 können wie in Fig. 1 gezeigt ausgebildet sein. In diesem Fall wäre für jedes Videosystem 10 eine eigene erste und zweite Videodatenerzeugungsvorrichtung vorgesehen. Es kann jedoch auch vorgesehen sein, dass eines oder mehrere der Videosysteme 10 eine Vielzahl an Multiplexern aufweisen, wobei die jeweilige erste Videodatenerzeugungseinrichtung mit jedem ersten Videodateneingang eines jeden der jeweiligen Vielzahl an Multiplexern verbunden ist, und wobei die jeweilige zweite Videodatenerzeugungseinrichtung mit jedem zweiten Videodateneingang eines jeden der jeweiligen Vielzahl an Multiplexern verbunden ist. In diesem Fall, würden die entsprechenden Videosysteme eine Vielzahl an Videoanzeigevorrichtungen aufweisen, wobei jede der jeweiligen Vielzahl an Videoanzeigevorrichtungen mit dem Videodatenausgang eines der jeweiligen Vielzahl an Multiplexern verbunden ist. In so einem Fall wäre es sogar denkbar, dass ein Luftfahrzeug 1 lediglich ein einziges Videosystem 10 aufweist, wobei in diesem Fall die einzelnen der Vielzahl an Videoanzeigevorrichtung angemessen in dem Luftfahrzeug verteilt sind.

In einem Luftfahrzeug 1 des vorliegenden Ausführungsbeispiels können die jeweiligen ersten Videodatenerzeugungsvorrichtungen dazu ausgebildet sein, essenzielle, insbesondere sicherheitsrelevante, Videodaten zu erzeugen, und die jeweiligen zweiten Videodatenerzeugungsvorrichtung können dazu ausgebildet sein, nicht-essenzielle, insbesondere nicht sicherheitsrelevante Videodaten zu erzeugen. Essenzielle Videodaten können hierbei alle für die Passagiere beispielsweise während eines Start- oder Landevorgangs oder während eines Notfalls notwendige Daten, etwa bezüglich einer Pflicht, einen Sicherheitsgurt anzulegen, beinhalten. Nicht-essenzielle Videodaten können etwa Unterhaltungsmedien oder ähnliches beinhalten.

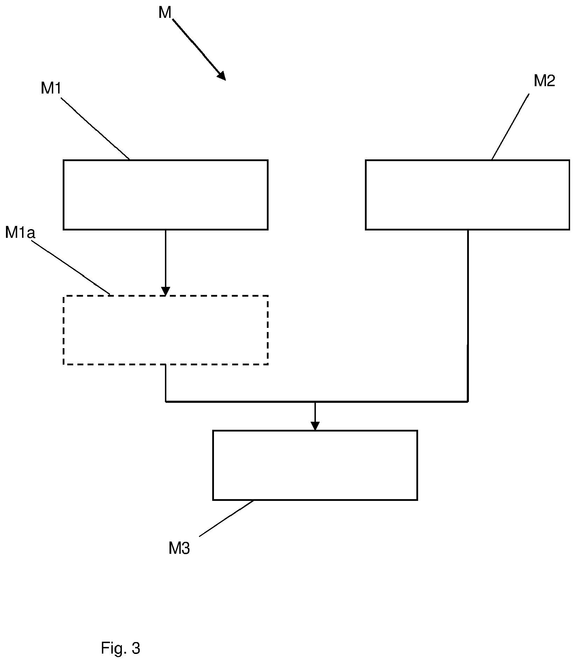

Fig. 3 zeigt ein schematisches Flussdiagramm eines Verfahrens M zur Ausgabe von Videodaten gemäß eines Ausführungsbeispiels der vorliegenden Erfindung.

In einem ersten Verfahrensschritt M1 werden erste Videodaten durch einen ersten Videodateneingang eines Multiplexers. In einem zweiten Verfahrensschritt M2, welcher generell zeitglich zu dem ersten Verfahrensschritt M1 erfolgen kann, werden zweite Videodaten durch einen zweiten Videodateneingang des Multiplexers empfangen. In einem weiteren Verfahrensschritt M3 werden Videodaten durch einen Videodatenausgang des Multiplexers ausgegeben, wobei die zweiten Videodaten nur ausgegeben werden, wenn eine Schalteinrichtung des Multiplexers bestimmt, dass alle der ersten Videodaten ausgegeben wurden.

In einem optionalen Verfahrensschritt M1a kann ein erster Pixel eines in den ersten Videodaten enthaltenen Videoframes durch eine Videoauswertungseinrichtung des Multiplexers bestimmt werden.

Das hier gezeigte Verfahren kann insbesondere, wie vorhergehend mit Bezug auf das in Fig. 1 gezeigte Ausführungsbeispiel eines Videosystem beschrieben, durchgeführt werden.

### BEZUGSZEICHENLISTE

- 1: Luftfahrzeug
- 10: Videosystem
- 100: Multiplexer
- 110: erster Videodateneingang
- 120: zweiter Videodateneingang
- 130: Videodatenausgang
- 140: Schalteinrichtung
- 150: Videoauswertungseinrichtung
- 160: erste Pixelzähleinrichtung
- 170: zweite Pixelzähleinrichtung
- 180: Speichereinrichtung
- 200: erste Videodatenerzeugungsvorrichtung
- 300: zweite Videodatenerzeugungsvorrichtung
- 400: Videoanzeigevorrichtung
- M: Verfahren zur Ausgabe von Videodaten
- M1: Verfahrensschritt zum Empfangen von ersten Videodaten
- M1a: Verfahrensschritt zum Bestimmen eines ersten Pixels
- M2: Verfahrensschritt zum Empfangen von zweiten Videodaten
- M3: Verfahrensschritt zum Ausgeben von Videodaten

## Patentansprüche

1. Multiplexer (100), mit
einem ersten Videodateneingang (110), welcher dazu ausgebildet ist, erste Videodaten zu empfangen;
einem zweiten Videodateneingang (120), welcher dazu ausgebildet ist, zweite Videodaten zu empfangen;
einem Videodatenausgang (130), welcher dazu ausgebildet ist, die ersten Videodaten und die zweiten Videodaten auszugeben; und
einer Schalteinrichtung (140), welche zwischen dem ersten und zweiten Videodateneingang (110; 120) und dem Videodatenausgang (130) angeordnet und dazu ausgebildet ist, sicherzustellen, dass alle der ersten Videodaten von dem Videodatenausgang (130) ausgegeben werden.

2. Multiplexer (100) nach Anspruch 1, wobei der Multiplexer (100) derart ausgebildet ist, dass alle der ersten Videodaten an die Schalteinrichtung (140) übermittelt werden.

3. Multiplexer (100) nach einem der Ansprüche 1 oder 2, weiterhin aufweisend eine Videoauswertungseinrichtung (150), welche dazu ausgebildet ist, die ersten Videodaten zu analysieren und einen ersten Pixel eines in den ersten Videodaten enthaltenen Videoframes zu bestimmen.

4. Multiplexer (100) nach Anspruch 3, weiterhin aufweisend eine erste Pixelzähleinrichtung (160), welche dazu ausgebildet ist, ausgehend von dem von der Videoauswertungseinrichtung (150) bestimmten ersten Pixel die Schalteinrichtung (140) zu veranlassen, die zweiten Videodaten auszugeben, wenn alle Pixel des in den ersten Videodaten enthaltenen Videoframes ausgegeben wurden.

5. Multiplexer (100) nach einem der Ansprüche 3 oder 4, weiterhin aufweisend eine zweite Pixelzähleinrichtung (170), welche dazu ausgebildet ist, ausgehend von dem von der Videoauswertungseinrichtung (150) bestimmten ersten Pixel zu veranlassen, dass die zweiten Videodaten an die Schalteinrichtung (140) übermittelt werden, wenn alle Pixel des in den ersten Videodaten enthaltenen Videoframes ausgegeben wurden.

6. Multiplexer (100) nach einem der vorhergehenden Ansprüche, weiterhin aufweisend eine Speichereinrichtung (180), welche dazu ausgebildet ist, die zweiten Videodaten zu speichern.

7. Videosystem (10) mit
mindestens einem Multiplexer (100) nach einem der Ansprüche 1 bis 6; einer ersten Videodatenerzeugungsvorrichtung (200), welche mit dem ersten Videodateneingang (110) des mindestens einen Multiplexers (100) verbunden ist;
einer zweiten Videodatenerzeugungsvorrichtung (300), welche mit dem zweiten Videodateneingang (120) des mindestens einen Multiplexers (100) verbunden ist; und
mindestens einer Videoanzeigevorrichtung (400), welche mit dem Videodatenausgang (130) des mindestens Multiplexers (100) verbunden ist.

8. Videosystem (10) nach Anspruch 7, wobei die erste Videodatenerzeugungsvorrichtung (200) dazu ausgebildet ist, essenzielle, insbesondere sicherheitsrelevante, Videodaten zu erzeugen, und wobei die zweite Videodatenerzeugungsvorrichtung (300) dazu ausgebildet ist, nicht-essenzielle, insbesondere nicht sicherheitsrelevante Videodaten zu erzeugen.

9. Videosystem (10) nach einem der Ansprüche 7 oder 8, aufweisend eine Vielzahl an Multiplexern (100) nach einem der Ansprüche 1 bis 8, wobei die erste Videodatenerzeugungseinrichtung (200) mit jedem ersten Videodateneingang (110) eines jeden der Vielzahl an Multiplexern (100) verbunden ist, und wobei die zweite Videodatenerzeugungseinrichtung (300) mit jedem zweiten Videodateneingang (120) eines jeden der Vielzahl an Multiplexern (100) verbunden ist; und
eine Vielzahl an Videoanzeigevorrichtungen (400), wobei jede der Vielzahl an Videoanzeigevorrichtungen (400) mit dem Videodatenausgang (130) eines der Vielzahl an Multiplexern (100) verbunden ist.

10. Luftfahrzeug (1) mit einem Videosystem (10) nach einem der Ansprüche 7 bis 9.

11. Verfahren (M) zur Ausgabe von Videodaten, aufweisend:
ein Empfangen von ersten Videodaten (M1) durch einen ersten Videodateneingang (110) eines Multiplexers (100);
ein Empfangen von zweiten Videodaten (M2) durch einen zweiten Videodateneingang (120) des Multiplexers (100); und
ein Ausgeben von Videodaten (M3) durch einen Videodatenausgang (130) des Multiplexers (100), wobei die zweiten Videodaten nur ausgegeben werden, wenn eine Schalteinrichtung (140) des Multiplexers (100) bestimmt, dass alle der ersten Videodaten ausgegeben wurden.

12. Verfahren nach Anspruch 11, weiterhin aufweisend:
ein Bestimmen eines ersten Pixels (M1a) eines in den ersten Videodaten enthaltenen Videoframes durch eine Videoauswertungseinrichtung (150) des Multiplexers (100).

13. Verfahren nach Anspruch 12, wobei die Schalteinrichtung (140) des Multiplexers (100) mittels einer ersten Pixelzähleinrichtung (160), welche die ersten Videodaten ausgehend von dem bestimmen ersten Pixels des in den ersten Videodaten enthaltenen Videoframes einzelnen Videoframes zuordnet, bestimmt, wann all der ersten Videodaten ausgegeben wurden.

14. Verfahren nach einem der Ansprüche 12 oder 13, wobei die zweiten Videodaten nur an die Schalteinrichtung (140) übermittelt werden, wenn eine zweite Pixelzähleinrichtung (170) des Multiplexers (100) ausgehend von dem bestimmen ersten Pixels des in den ersten Videodaten enthaltenen Videoframes bestimmt, dass alle der ersten Videodaten ausgegeben wurden.

15. Verfahren nach einem der Ansprüche 11 bis 14, wobei die zweiten Videodaten in einer Speichereinrichtung (180) des Multiplexers (100) gespeichert werden.
